(19) Europäisches Patentamt

European Patent Office

Office européen des brevets

(11) Veröffentlichungsnummer: **0 303 142 B1**

(12) **EUROPÄISCHE PATENTSCHRIFT**

(45) Veröffentlichungstag der Patentschrift: **15.12.93**

(21) Anmeldenummer: **88112464.8**

(22) Anmeldetag: **01.08.88**

(51) Int. Cl.⁵: **H04M 3/30**

(54) Verfahren zur Messung von Leitungsparametern von Teilnehmeranschlussleitungen eines Fernmeldenetzes.

(30) Priorität: **07.08.87 DE 3726356**

(43) Veröffentlichungstag der Anmeldung:
**15.02.89 Patentblatt 89/07**

(45) Bekanntmachung des Hinweises auf die Patenterteilung:
**15.12.93 Patentblatt 93/50**

(84) Benannte Vertragsstaaten:
**AT BE CH DE FR GB IT LI LU NL SE**

(56) Entgegenhaltungen:
**GB-A- 2 126 732**
**US-A- 4 028 507**
**US-A- 4 186 282**

**IEEE TRANSACTIONS ON COMMUNICA-
TIONS, Band COM-29, Nr. 10, Oktober 1981,
Seiten 1434-1441, IEEE, New York, US; T.A.
HANRAHAN et al.: "Subscriber line testing
for digital switching offices"**

**PROCEEDINGS OF ICASSP '81, IEEE INTER-
NATIONAL CONFERENCE ON ACOUSTICS,
SPEECH AND SIGNAL PROCESSING, Atlanta,
Georgia, 30. März - 1. April 1981, Band 1,
Seiten 243-246, IEEE, New York, US; B. WI-**

**DROW et al.: "Adaptive design of digital filters"**

(73) Patentinhaber: **SIEMENS AKTIENGESELL-
SCHAFT
Wittelsbacherplatz 2
D-80333 München(DE)**

(72) Erfinder: **Elvidge, James
21476 Summertracecircle
Boca Raton, FL 33428(US)**
Erfinder: **Ohlendorf, Günter, Dipl.-Ing.
Sterzenweg 12
D-8193 Münsing 2(DE)**

EP 0 303 142 B1

**Beschreibung**

Die Erfindung betrifft ein Verfahren zur Messung von Leitungsparametern von Teilnehmeranschlußleitungen eines Fernmeldenetzes.

Um die Dienstgüte öffentlicher Netze gewährleisten zu können, ist es erforderlich und auch durch internationale Empfehlungen vorgesehen, die Teilnehmeranschlußleitungen solcher Netze routinemäßig zu überprüfen. Bei solchen Routineprüfungen werden Fremdspannungen auf den Teilnehmerleitungsadern, die Isolationswiderstände zwischen den Adern sowie jeweils zwischen einer Ader und Erde und Kapazitäten zwischen den Adern sowie jeweils zwischen einer Ader und Erde gemessen.

Bisher wird dabei so vorgegangen, daß für die Ermittlung jedes einzelnen Parameters ein gesondertes Meßnetzwerk an die zu prüfende Teilnehmeranschlußleitung angeschaltet wird. Es muß dabei jeweils abgewartet werden, bis die sich ergebenden Einschwingvorgänge abgeklungen sind. Die dadurch entstehende Verlängerung der Meßzeit ist bei der Häufigkeit, mit der entsprechend den internationalen Empfehlungen solche Routineprüfungen vorgenommen werden sollen, ein nicht zu vernachlässigender Faktor.

Die Aufgabe der Erfindung besteht nun darin, ein Meßverfahren der eingangs genannten Art anzugeben, das schneller zu den jeweiligen Meßergebnissen führt.

Erfindungsgemäß wird diese Aufgabe dadurch gelöst,daß bei an die Teilnehmeranschlußleitung angeschlossenem Endgerät nacheinander den beiden Adern der Teilnehmeranschlußleitung unter jeweiliger Erdung der anderen Ader und den beiden miteinander verbundenen Adern der Teilnehmeranschlußleitung über einen Speisewiderstand eine Impulsspannung aufgeprägt wird, daß die Adern in diesen Meßkonfigurationen über einen Entladewiderstand gegen einen Erdpotential führenden Schaltungspunkt entladen werden, daß jeweils zu diskreten Zeitpunkten die entsprechenden resultierenden Spannungswerte gemessen werden, und daß aus den dabei erhaltenen Meßwerten entsprechend ihrer Abhängigkeit von den bekannten Werten für den Leitungswiderstand und für die Kapazität des Endgeräts und den Leitungsparametern der Kapazitäten und Induktions- bzw. Ableitwiderständen zwischen den Leitungsadern bzw. zwischen jeweils einer Leitungsader und einem Erdpotential führenden Schaltungspunkt die Werte dieser Leitungsparameter ermittelt werden.

Der Erfindung liegt also der Gedanke zugrunde, die zu prüfende Teilnehmeranschlußleitung zusammen mit dem angeschlossenen Teilnehmerendgerät als Zweipol mit komplexer Impedanz zu betrachten. Unter Bezugnahme auf ein vereinfachtes Ersatzschaltbild eines solchen Zweipols, das die Leitungsparameter, sowie den Leitungswiderstand und die Kapazität des Endgeräts umfaßt, läßt sich dann mit den gemessenen Werten ein Gleichungssystem von n Gleichungen für n Leitungsparamter aufstellen, aufgrund dessen die Werte für die Leitungsparameter ermittelt werden können, was, wenn gemäß weiterer Ausgestaltung der Erfindung für diese Ermittlung ein Digitalsignalprozessor eingesetzt wird, besonders schnell vonstatten geht.

Damit unterscheidet sich das erfindungsgemäße Verfahren von einem bekannten Verfahren zur Prüfung von Teilnehmeranschlußleitungen eines digitalen Fernsprechvermittlungssystems (IEEE Transactions on Communications, Band Com-29, Nr. 10, Oct. 1981, Seiten 1434-1441, IEEE, New York, US; T. A. Hanrahen et al.: "Subscriber line testing for digital switching offices"), zu dessen Durchführung ein Dreipol-Meßgerät erforderlich ist.

Die auf diese Weise ermittelten Grobwerte für die Leitungsparameter, die für eine Routineprüfung ausreichend genau sind, lassen sich gemäß einer weiteren Ausgestaltung der Erfindung im Rahmen der Fehlerlokalisierung oder der Nachprüfung reparierter Teilnehmeranschlüsse dadurch verfeinern, daß unter Verwendung der ermittelten Werte der Leitungsparameter die Koeffizienten eines die Struktur des Ersatzschaltbildes der Teilnehmeranschlußleitung nachbildenden Digitalfilters eingestellt werden, daß daraufhin an der Teilnehmeranschlußleitung und am Digital-filter die vorgenannten Messungen wiederholt und die jeweiligen resultierenden Spannungswerte miteinander verglichen und aus dem Vergleichsergebnis Korrekturwerte für die maßgeblichen Filterkoeffizienten ermittelt werden, denen gemäß die Filterkoeffizienten verändert werden, daß diese Meß-Vergleichs- und Korrekturprozedur so lange wiederholt wird, bis die sich dabei ergebende Koeffizientenänderung einen vorgegebenen Grenzwert unterschritten hat, und daß aus den dann eingestellten Werten der Filterkoeffizienten die endgültigen Werte der genannten Leitungsparameter abgeleitet werden.

Nachstehend wird die Erfindung anhand eines Ausführungsbeispieles unter Bezugnahme auf eine Zeichnung näher erläutert.

In der Zeichnung zeigen:

FIG 1 ein vereinfachtes Ersatzschaltbild einer Teilnehmeranschlußleitung mit angeschlossenem Teilnehmerendgerät,

die FIG 2 bis 7 Blockschaltbilder zur Veranschaulichung von 6 unterschiedlichen Meßkonfigurationen,

FIG 8 ein Blockschaltbild einer Anordnung zur Durchführung des erfindungsgemäßen Verfahrens.

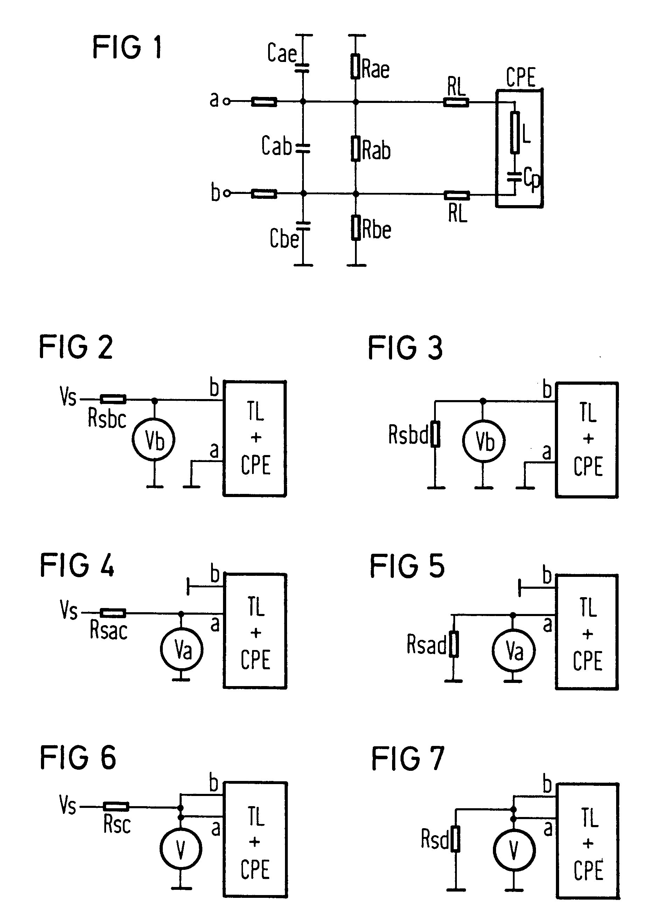

Das in FIG 1 dargestellte Ersatzschaltbild ist insofern vereinfacht, als die zwischen den Leitungsadern a und b und Erde liegenden Widerstände Rae und Rbe tatsächlich für die Parallelschaltung der Ableitwiderstände und Widerständen stehen, die zwischen den Adern der Teilnehmeranschlußleitung und den Speisespannungspotential führenden Anschlüssen einer Speisespannungsquelle liegen. Ferner sind Wechselspannungseinstreuungen auf die Teilnehmeranschlußleitung unberücksichtigt gelassen. Mit Rab ist der Isolationswiderstand zwischen den Leitungsadern und mit RL der Leitungswiderstand bezeichnet. Cae und Cbe steht für die Kapazität der Leitungsadern gegen Erde und Cab für die Kapazität zwischen den Leitungsadern. L und Cp sind die Induktivität und Kapazität des an die Teilnehmeranschlußleitung angeschlossenen Teilnehmerendgerätes CPE. Für die geforderte Meßgenauigkeit ist ein derartiges vereinfachtes Ersatzschaltbild ausreichend.

In Durchführung des erfindungsgemäßen Verfahrens wird in einem ersten Meßschritt in einer Meßkonfiguration, wie sie FIG 2 zeigt, über einen Ladewiderstand Rsbc der b-Ader der Teilnehmeranschlußleitung eine Impulsspannung Vs aufgeprägt, während die a-Ader an Erde gelegt ist. Die dabei an der b-Ader zu einem diskreten Zeitpunkt gemessene Impulsantwort Vb hängt von den Leitungsparamtern der Ableitwiderstände Rae und Rbe sowie des Isolationswiderstandes Rab und den Kapazitäten zwischen den Leitungsadern und Erde Cae und Cbe sowie der Kapazität zwischen den Leitungsadern Cab gemäß dem Ersatzschaltbild nach FIG 1 in folgendem Zusammenhang ab:

$$Vb = f1 (C'' + Cbe, Rsbc, R'b),$$

wobei gilt: $C'' = Cab + Cp$; $R'b = Rab \parallel Rbe$ und $Ra = Rab \parallel Rae$.

In einem zweiten Verfahrensschritt wird gemäß der Meßkonfiguration nach FIG 3 die b-Ader bei geerdeter a-Ader über einen Entladewiderstand Rsbd wieder entladen, wobei für den Zusammenhang der dabei zu einem diskreten Zeitpunkt gemessenen Entladespannung und Leitungsparamtern bzw. des Entladewiderstandes das folgende gilt:

$$Vb = f2 (C'' + Cbe, R'b, Rsbd).$$

In einem dritten Verfahrensschritt wird nun bei geerdeter b-Ader der a-Ader über den Ladewiderstand Rsac eine Impulsspannung Vs aufgeprägt und die entstehende Impulsantwort Va gemessen, (siehe Meßkonfiguration gemäß FIG 4) die mit den Leitungsparamtern und dem Ladewiderstand im folgenden Zusamamenhang steht:

$$Va = f3 (C'' + Cae, Rsac, R'a).$$

Im Zuge eines vierten Verfahrensschrittes, (siehe FIG 5) erfolgt eine Entladung der a-Ader über einen Entladewiderstand Rsad bei geerdeter b-Ader, wobei die zu einem diskreten Zeitpunkt gemessene Entladespannung Va in folgender Weise von den Leitungsparametern und dem Entladewiderstand abhängt:

$$Va = f4 (C'' + Cae, R'a, Rsad.$$

Es schließt sich nun ein sechster Verfahrensschritt an, wozu gemäß FIG 6 die beiden Leitungsadern a und b der Teilnehmeranschlußleitung miteinander verbunden sind und über einen Ladewiderstand Rsc mit einer Impulsspannung Vs beaufschlagt werden. Die zu einem diskreten Zeitpunkt gemessene Impulsantwort steht zu den Leitungsparametern und dem Ladewiderstand in folgendem Zusammenhang:

$$V = f5 (Cae + Cbe, Rsc, Rae \parallel Rbe).$$

In einem letzten Verfahrensschritt, (siehe FIG 7), werden die miteinander verbundenen Leitungsadern a und b über einen Entladewiderstand Rsd entladen und die zu einem diskreten Zeitpunkt auftretende Entladespannung V gemessen. Diese Spannung steht zu den Leitungsparametern und dem Entladewiderstand in dem Zusammenhang:

$$V = f6 (Cae + Cbe, Rae \parallel Rbe, Rsd).$$

Mit den Meßwerten der vorerwähnten sechs Messungen und den angegebenen Zusammenhängen der Meßwerte mit den Leitungsparametern und den bekannten Größen, nämlich dem Lade- bzw. Entladewiderstand Rc bzw. Rd und für die Kapazität Cp des Endgeräts CPE stehen sechs Gleichungen für die sechs Unbekannten des Isolationswiderstandes Rab bzw. der Ableitwiderstände Rae und Rbe und der Kapazitäten zwischen den Leitungsadern Cab bzw. der Kapazitäten Cae und Cbe zwischen jeweils einer Leitungsader und einem Erdpotential führenden Schaltungspunkt Cbe zur Verfügung. Es lassen sich daher die Werte für diese sechs Leitungsparameter errechnen.

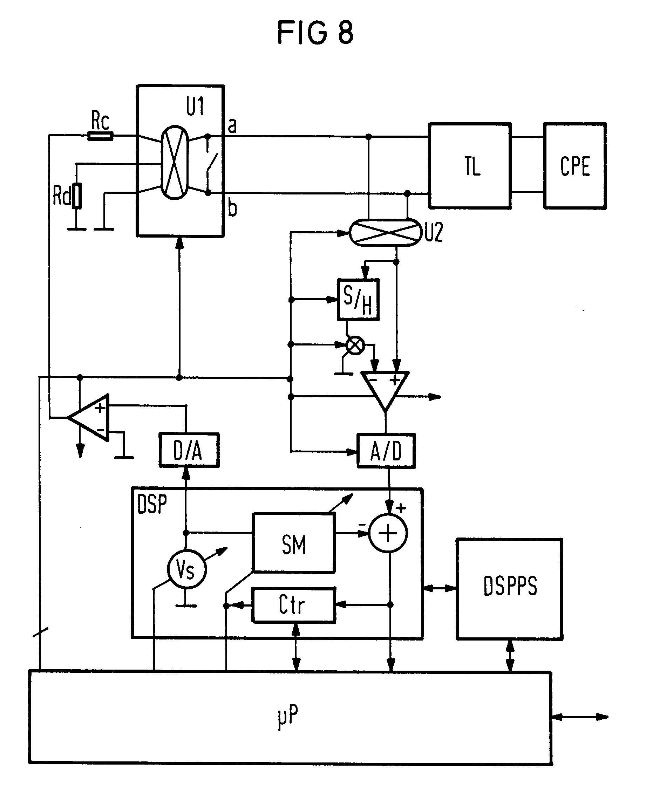

Die FIG 8 zeigt eine Schaltungsanordnung zur Durchführung des erfindungsgemäßen Verfahrens. Mit Hilfe eines Umschalters U1, der unter dem Steuereinfluss eines Digitalsignalprozessors $\mu$P steht, werden mit Hilfe dieser Anordnung die verschiedenen Meßkonfigurationen hergestellt, nämlich die Adern a und b der Teilnehmeranschlußleitung TL, die mit einem Endgerät CPE abgeschlossen ist, wahlweise über einen Ladewiderstand Rc mit einer Impulsspannung beaufschlagt, die von einer Spannungsquelle VS geliefert wird und deren Spannung nach einer Digital-Analog-Wandlung durch einen Digital-Analog-Wandler D/A an sie gelangt, bzw. über einen Entladewiderstand Rd mit Erdpotential verbunden bzw. die beiden Adern mit einander verbinden.

Mit Hilfe eines zweiten Umschalters U2 wird wahlweise an der a- oder an der b-Ader unter Mitweirkung eines Abtast- und Haltekreises S/H zu jeweils diskreten Zeitpunkten die Impulsantwort abgenommen und nach einer Analog-Digital-Wandlung mit Hilfe eines Analog-Digital-Wandlers A/D dem digitalen Signalprozessor $\mu$P zugeführt, der dann die vorgenannte rechnerische Ermittlung der Parameterwerte aus der Gesamtheit der Meßergebnisse vornimmt.

Mit Hilfe der vorgenannten Methode lassen sich lediglich Grobwerte für die Leitungsparamter ermitteln, die jedoch zur Durchführung einer Routineprüfung ausreichen. Wie schon angedeutet, lassen sich diese Grobwerte durch eine weitere Ausgestaaltung der Erfindung noch verfeinern. Die Anordnung gemäß FIG 8 weist hierzu ferner eine Eirnichtung DSP mit einem Programmspeicher DSPPS auf, deren wesentlicher Bestandteil ein Digitalfilter SM ist, mit dessen Hilfe sich das Ersatzschaltbild der Teilnehmeranschlußleitung nachbilden läßt.

Die Koeffizienten dieses Digitalfilters werden zunächst entsprechend den durch die vorgenannten Verfahrensschritte ermittelten Grobwerten der Leitungsparameter eingestellt. Es werden dann die sechs Messungen sowohl im Zusammenhang mit den Adern a und b der Teilnehmeranschlußleitung TL als auch im Zusammenhang mit dem die Teilnehmeranschlußleitung nachbildenden Digitalfilter wiederholt. Die sich daraus ergebenden Werte für Leitungsparamter werden miteinander verglichen und entsprechend dem Ergebnis dieses Vergleichs wird ein Korrekturfaktor für die Koeffizienten des Digitalfilters unter Mitwirkung einer Steuerung Ctr des Digitalfilters errechnet, woraufhin diese Koeffizienten neu eingestellt werden. Diese gesamte Prozedur wird nun wiederholt und zwar so lange, bis sich Korrekturfaktoren ergeben, die einen vorgegebenen Grenzwert unterschreiten.

Aus den dann eingestellten Koeffizienten des Digitalfilters werden schließlich als endgültiges Ergebnis die Feinwerte für die Leitungsparameter ermittelt.

In einem Anhang sind die formelmäßigen Zusammenhänge zwischen den bei den erwähnten Meßkonfigurationen sich ergebenden Impulsantworten und den zu ermittelnden Leitungsparametern bzw. bekannten Leitungsgrößen angegeben.

Anhang

Zu FIG 2

$$Vb(t) = \mathcal{L}^{-1} \frac{Vs(DC)(N2s2+N,s+No)}{S(D3s3+D2s2+D,s+Do)}$$

wobei gilt: $\mathcal{L}^{-1}$ = Laplace Transformation

N2 = GsbcLCp

N1 = Gsbc2RLCp

NO = Gsbc

D3 = LCp(Cab+Cbe)

D2 = Lcp(Gsbc+Gbe+Gab)+2RLCp(Cab+Cbe)

D1 = 2RLCp(Gsbe+Gbe+Gab)+(Cab+Cbe+Cp)DO

DO = Gsbc+Gbe+Gab

G = 1/R

Gb' = Gab+Gbe

Ga' = Gab+Gae

C" = Cp+Cab

Cb" = Cbe+C"

Ca" = Cae+C"

Näherungsweise ist dann:

$$Vb(t) = Eb(I-e^{\delta 1 t}) \text{ mit } \delta 1 = - \frac{Gsbc+Gb'}{2RLCp(Gsbc+Gb')+Cb"} \text{ und}$$
$$Eb = \frac{Vs(DC)Gsbe}{Gsbe+Gbe+Gab}$$

Zu Fig 3

$$Vb(t) = \mathcal{L}^{-1} \left\{ \frac{Vib(2RLCp(Cbe+C\_b)s+Cb"}{2RLCp(Cbe+Cab)s^2 +(2RLCp(Gb'+Gsbd)+C"b)s+Gb'+Gsdb} \right\}$$

Vib die Spannung an der b-Ader vor der Entladung ist. Näherungs-weise gilt dann:

$$Vb(t) = Vib.e^{\delta 2 t}$$
$$\text{mit } \delta 2 = - \frac{Gsbd+Gb'}{2RLCp(Gb'+Gsbd)+Cb"}$$

Zu FIG 4 (analog FIG 2)

$$Va(t) = Ea(I-e^{\delta 3 t}) \text{ mit } \delta 3 = - \frac{Gsbc+Ga'}{2RLCp(Gsbc+Ga')+Ca"}$$

Zu FIG 5 (analog FIG 3)

$$V_a(t) = V_{ia} \, e^{\delta 4 t} \quad \text{mit} \quad \delta 4 = - \frac{G_{sad}+G_a'}{2R_LC_p(G_a'+G_{sad})+C_a''}$$

Zu FIG 6

$$V(t) = \frac{V_sG_{sc}}{G_{be}+G_{ae}+G_{se}} (1 - e^{\delta 5 t}) \quad \text{mit} \quad \delta 5 = - \frac{G_{sc}+G_{be}+G_e}{C_{ae}+C_{be}}$$

Zu FIG 7

$$v(t) = V_{ie}^{\delta 6 t} \quad \text{mit} \quad \delta 6 = - \frac{G_{sd}+G_{be}+G_{ae}}{C_{ae}+C_{be}}$$

**Patentansprüche**

1. Verfahren zur Messung von Leitungsparametern von Teilnehmeranschlußleitungen eines Fernmeldenetzes, **dadurch gekennzeichnet**, daß bei an die Teilnehmeranschlußleitung (TL) angeschlossenem Endgerät nacheinander den beiden Adern (a, b) der Teilnehmeranschlußleitung (TL) unter jeweiliger Erdung der anderen Ader und den beiden miteinander verbundenen Adern (a, b) der Teilnehmeranschlußleitung (TL) über einen Speisewiderstand (Rsc, Rsac, Rsbc) eine Impulsspannung aufgeprägt wird, daß die Adern in diesen Meßkonfigurationen über einen Entladewiderstand (Rsad, Rsbd, Rsd) gegen einen Erdpotential führenden Schaltungspunkt entladen werden, daß jeweils zu diskreten Zeitpunkten die entsprechenden resultierenden Spannungswerte gemessen werden, und daß aus den dabei erhaltenen Meßwerten entsprechend ihrer Abhängigkeit von den bekannten Werten für den Lade- bzw. Entladewiderstand (Rc bzw. Rd) und für die Kapazität (C) des Endgeräts (CPE) und den Leitungsparametern der Kapazitäten (Cae, Cab, Cbe) und Isolations- bzw. Ableitwiderständen (Rae, Rab, Rbe) zwischen den Leitungsadern (a, b) bzw. zwischen einer Leitungsader (a bzw. b) und einem Erdpotential führenden Schaltungspunkt die Werte dieser Leitungsparamter ermittelt werden.

2. Verfahren nach Anspruch 1, **dadurch gekennzeichnet**, daß die Ermittlung der Werte der Leitungsparameter mit Hilfe eines digitalen Signalprozessors ($\mu$P) erfolgt.

3. Verfahren nach Anspruch 1 oder 2, **dadurch gekennzeichnet**, daß unter Verwendung der emittelten Werte der Leitungsparameter die Koeffizienten eines die Struktur des Ersatzschaltbildes der Teilnehmeranschlußleitung (TL) nachbildenden Digitalfilters (SM) eingestellt werden, daß daraufhin an der Teilnehmeranschlußleitung (LT) und am Digitalfilter (SM) die vorgenannten Messungen wiederholt und die jeweiligen resultierenden Spannungswerte miteinander verglichen und aus dem Vergleichsergebnis Korrekturwerte für die maßgeblichen Filter-koeffizienten ermittelt werden, denen gemäß die Filterkoeffizienten verändert werden, daß diese Meß- Vergleichs- und Korrekturprozedur solange wiederholt wird, bis die sich dabei ergebende Koeffizientenänderung einen vorgegebenen Grenzwert unterschritten hat, und daß aus den dann eingestellten Werten der Filterkoeffizienten die endgültigen Werte der genannten Leitungsparameter abgeleitet werden.

**Claims**

1. Method for measuring line parameters of subscriber lines of a telecommunications network, characterized in that in the case of a terminal connected to the subscriber line (TL), an impulse voltage is impressed successively on the two wires (a, b) of the subscriber line (TL) with respective grounding of the other wire and on the two wires (a, b) of the subscriber line (TL) connected to one another via a charging resistance (Rsc, Rsac, Rsbc), in that the wires in said measuring configurations are discharged to a circuit point carrying ground potential via a discharge resistance (Rsad, Rsbd, Rsd), in that the corresponding resulting voltage values are measured at discrete times in each case, and in that the values of said line parameters are determined from the measured values thus obtained depending on their relationship with the known values for the charging and discharge resistances (Rc and Rd

6

respectively) and for the capacitance (C) of the terminal (CPE) and the line parameters of the capacitances (Cae, Cab, Cbe) and insulating and leakage resistances respectively (Rae, Rab, Rbe) between the line wires (a, b) or between one line wire (a or b) and a circuit point carrying ground potential.

**2.** Method according to Claim 1, characterized in that the values of the line parameters are determined with the aid of a digital signal processor ($\mu$P).

**3.** Method according to Claim 1 or 2, characterized in that the coefficients of a digital filter (SM) simulating the structure of the equivalent circuit of the subscriber line (TL) are set using the values of the line parameters determined, in that thereupon the above-mentioned measurements are repeated at the subscriber line (LT) and at the digital filter (SM) and the respective resulting voltage values are compared with one another and correction values for the decisive filter coefficients are determined from the result of the comparison, according to which the filter coefficients are changed, in that said measuring, comparing and correcting procedure is repeated until the coefficient change resulting thereby falls below a predetermined limit value, and in that the final values of said line parameters are derived from the values of the filter coefficients then set.

**Revendications**

**1.** Procédé pour mesurer des paramètres de lignes d'abonnés d'un réseau de télécommunications, caractérisé par le fait que dans le cas d'un terminal raccordé à la ligne d'abonné (TL), une tension impulsionnelle est injectée, par l'intermédiaire d'une résistance d'alimentation (Rsc, Rsac, Rsbc), successivement dans les deux conducteurs (a,b) de la ligne d'abonné (TL), moyennant respectivement la mise à la terre de l'autre conducteur, et aux deux conducteurs (a,b), reliés entre eux, de la ligne d'abonné (TL), que les conducteurs sont déchargés, dans ces configurations de mesure, par l'intermédiaire d'une résistance de décharge (Rsad, Rsbd, Rsd) par rapport à un point de circuit appliquant le potentiel de terre, que les valeurs de tension résultantes correspondantes sont mesurées respectivement à des instants discrets, et qu'à partir des valeurs de mesure obtenues et en fonction de leur dépendance vis-à-vis des valeurs connues pour la résistance de charge ou de décharge (Rc ou Rd) et pour la capacité (C) du terminal (CPE) et en fonction des paramètres de ligne des capacités (Cae, Cab, Cbe) et des résistances d'isolement ou de dérivation (Rae, Rab, Rbe) entre les conducteurs de ligne (a,b) ou entre un conducteur de ligne (a ou b) et un point du circuit appliquant le potentiel de terre on détermine les valeurs de ces paramètres de ligne.

**2.** Procédé suivant la revendication 1, caractérisé par le fait que la détermination des valeurs des paramètres de ligne est réalisée à l'aide d'un processeur de signaux numérique ($\mu$P).

**3.** Procédé suivant la revendication 1 ou 2, caractérisé par le fait que les coefficients d'un filtre numérique (SM), qui simule la structure du schéma équivalent de la ligne d'abonné (TL), sont réglés moyennant l'utilisation des valeurs déterminées des paramètres de ligne, qu'ensuite les mesures indiquées précédemment sont à nouveau exécutées sur la ligne d'abonne (TL) et sur le filtre numérique (SM) et que les valeurs de tension résultantes déterminées sont comparées entre elles et qu'à partir du résultat de la comparaison sont déterminées, pour les coefficients déterminants du filtre, des valeurs de correction, sur la base desquelles les coefficients de filtre sont modifiés, que cette procédure de mesure, de comparaison et de correction est répétée, jusqu'à ce que la variation des coefficients que l'on obtient, soit tombée au-dessous d'une valeur limite prédéterminée, et que les valeurs définitives desdits paramètres de ligne sont obtenues à partir des valeurs alors réglées des coefficients de filtre.

## FIG 1

## FIG 2

## FIG 3

## FIG 4

## FIG 5

## FIG 6

## FIG 7

# FIG 8